(19) **Europäisches Patentamt European Patent Office Office européen des brevets**

(11) **EP 4 155 036 B1**

(12) **EUROPEAN PATENT SPECIFICATION**

(45) Date of publication and mention of the grant of the patent:
**27.08.2025 Bulletin 2025/35**

(21) Application number: **21306330.8**

(22) Date of filing: **24.09.2021**

(51) International Patent Classification (IPC):
**B25J 9/16** (2006.01)      **G06N 3/09** (2023.01)
**G06N 3/0464** (2023.01)

(52) Cooperative Patent Classification (CPC):
**B25J 9/1612; B25J 9/1697; G06N 3/0464;**
**G06N 3/09; G05B 2219/39271; G05B 2219/39484;**
**G05B 2219/39543; G05B 2219/40532**

(54) **A METHOD AND DEVICE FOR CONTROLLING A GRASPING ROBOT THROUGH A LEARNING PHASE AND A GRASPING PHASE**

VERFAHREN UND VORRICHTUNG ZUR STEUERUNG EINES GREIFROBOTERS DURCH EINE LERNPHASE UND EINE GREIFPHASE

PROCÉDÉ ET DISPOSITIF DE COMMANDE D'UN ROBOT DE PRÉHENSION PAR L'INTERMÉDIAIRE D'UNE PHASE D'APPRENTISSAGE ET D'UNE PHASE DE PRÉHENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.03.2023 Bulletin 2023/13**

(73) Proprietor: **TOYOTA JIDOSHA KABUSHIKI KAISHA**
**Toyota-shi, Aichi-ken 471-8571 (JP)**

(72) Inventors:
- **MEIER, Sven**
  **1140 BRUSSELS (BE)**
- **GARATTONI, Lorenzo**
  **1140 BRUSSELS (BE)**
- **MINCIULLO, Luca**
  **1140 BRUSSELS (BE)**
- **MANHARDT, Fabian**
  **80333 MÜNCHEN (DE)**
- **WANG,, Pengyuan**
  **80333 MÜNCHEN (DE)**
- **BUSAM, Benjamin**
  **80333 MÜNCHEN (DE)**
- **NAVAB, Nassir**
  **80333 MÜNCHEN (DE)**

(74) Representative: **Cabinet Beau de Loménie**
**103, rue de Grenelle**
**75340 Paris Cedex 07 (FR)**

(56) References cited:
- **HAMPALI SHREYAS ET AL: "HOnnotate: A Method for 3D Annotation of Hand and Object Poses", 2020 IEEE/CVF CONFERENCE ON COMPUTER VISION AND PATTERN RECOGNITION (CVPR), IEEE, 13 June 2020 (2020-06-13), pages 3193 - 3203, XP033805584, DOI: 10.1109/CVPR42600.2020.00326**
- **PAUL HENDERSON ET AL: "Learning single-image 3D reconstruction by generative modelling of shape, pose and shading", ARXIV.ORG, CORNELL UNIVERSITY LIBRARY, 201 OLIN LIBRARY CORNELL UNIVERSITY ITHACA, NY 14853, 19 January 2019 (2019-01-19), XP081005783**
- **LIANG-CHIEH CHEN ET AL: "Rethinking Atrous Convolution for Semantic Image Segmentation", 17 June 2017 (2017-06-17), XP055558070, Retrieved from the Internet <URL:https://arxiv.org/pdf/1706.05587v1.pdf>**
- **SIEB MAXIMILIAN ET AL: "Data Dreaming for Object Detection: Learning Object-Centric State Representations for Visual Imitation", 2018 IEEE-RAS 18TH INTERNATIONAL CONFERENCE ON HUMANOID ROBOTS (HUMANOIDS), IEEE, 6 November 2018 (2018-11-06), pages 1 - 9, XP033505520, DOI: 10.1109/HUMANOIDS.2018.8625007**

- KARUNRATANAKUL KORRAWE ET AL: "Grasping Field: Learning Implicit Representations for Human Grasps", 2020 INTERNATIONAL CONFERENCE ON 3D VISION (3DV), IEEE, 25 November 2020 (2020-11-25), pages 333 - 344, XP033880244, DOI: 10.1109/3DV50981.2020.00043
- DENG HAOWEN ET AL: "PPF-FoldNet: Unsupervised Learning of Rotation Invariant 3D Local Descriptors", 6 October 2018, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 620 - 638, ISBN: 978-3-540-74549-5, XP047488931
- WANG PENGYUAN ET AL: "DemoGrasp: Few-Shot Learning for Robotic Grasping with Human Demonstration", 2021 IEEE/RSJ INTERNATIONAL CONFERENCE ON INTELLIGENT ROBOTS AND SYSTEMS (IROS), IEEE, 27 September 2021 (2021-09-27), pages 5733 - 5740, XP034050397, DOI: 10.1109/IROS51168.2021.9636856

## Description

Field of the disclosure

The present disclosure is related to the field of robotics, and more precisely to the field of grasping objects using grasping robots.

Description of Related Art

Grasping of objects is a fundamental problem in robotics as it enables numerous applications. Robotic manipulators are already an integral part in modern workplaces where they are often used for repetitive tasks. While human-robot collaboration can even help in medical applications, it is often restricted to cases with clearly defined a priori motion patterns. When the interaction is more intricate and active manipulation is required, a priori definition becomes non-trivial such as in less structured domestic environments where service robots typically operate. Current approaches for robotic grasping lack generalization capabilities as they either concentrate on estimating the object pose (position and orientation in space), or learn grasping points which require detailed prior information of the object or a large set of annotations. Just like human hands, robotic grippers and arms have natural limits in their range of motion and have limited degrees-of-freedom, which restrict their possible grasping poses.

From the prior art, model-based grasping methods have been proposed. These methods typically comprise determining the 6D pose of objects to be grasped (i.e. the 3D orientation and the 3D translation) (W. Kehl, F. Manhardt, F. Tombari, S. Ilic, and N. Navab, "Ssd-6d: Making rgb-based 3d detection and 6d pose estimation great again" in ICCV, 2017; X. Deng, Y. Xiang, A. Mousavian, C. Eppner, T. Bretl, and D. Fox, "Self-supervised 6d object pose estimation for robot manipulation" in ICRA, 2020). Most traditional methods rely on local image features such as the SIFT method, or template matching. With the rise of consumer depth cameras, there has been a growing interest in 6D pose estimation from RGB-D data (Red Green Blue Depth). Also, with the help of the additional depth map, template matching has been used while other proposed to use handcrafted 3D descriptors, or to learn the pose task. With the advent of deep learning, 6D pose estimation received another boost in attention as consistently faster and more accurate approaches have been introduced. In essence, there are three different lines of work for estimating the 6D pose. The first is grounded on 3D descriptors (C. R. Qi, H. Su, K. Mo, and L. J. Guibas, "Pointnet: Deep learning on point sets for 3d classification and segmentation" in CVPR, 2017.; H. Deng, T. Birdal, and S. Ilic, "Ppf-foldnet: Unsupervised learning of rotation invariant 3d local descriptors" in ECCV, 2018). These descriptors can be computed for example via metric learning or by means of autoencoding. Other methods directly infer the 6D pose. While some methods regress the output pose, Kehl et al. ("Ssd-6d: Making rgb-based 3d detection and 6d pose estimation great again") turn it into a classification problem. A few methods also solve for the pose by means of pose refinement. The last and most prominent branch of works establishes 2D-3D correspondences and optimizes for pose using a variant of the PnP/RANSAC paradigm. While the accuracy of estimating the 6D pose keeps steadily increasing, it also comes with a heavy burden in annotating data for 3D CAD model and 6D pose, which scales poorly to multiple objects, often rendering it impractical for real applications.

From the prior art, model-free methods are also known. Model-free approaches are generally very attractive compared to model-based approaches due to their ability to generalize to previously unseen geometry. In essence, model-free grasping can be divided into discriminative approaches, and generative approaches. Discriminative methods sample grasping instructions which are then scored by a neural network, whereas generative models directly output grasping configurations.

Different training data modalities are used to train discriminative approaches. Dex-Net (J. Mahler, F. T. Pokorny, B. Hou, M. Roderick, M. Laskey, M. Aubry, K. Kohlhoff, T. Kröger, J. Kuffner, and K. Goldberg, "Dex-net 1.0: A cloud-based network of 3d objects for robust grasp planning using a multi-armed bandit model with correlated rewards" in ICRA, 2016; J. Mahler, J. Liang, S. Niyaz, M. Laskey, R. Doan, X. Liu, J. A. Ojea, and K. Goldberg, "Dex-net 2.0: Deep learning to plan robust grasps with synthetic point clouds and analytic grasp metrics" arXiv preprint arXiv:1703.09312, 2017) collects a large amount of samples from a simulator, which is then used to train their proposed Grasp Quality Convolutional Neural Network (CNN). The authors further extend Dex-Net to support suction grippers and dual-arm robots. While the previous methods all require depth data, some methods (S. Levine, P. Pastor, A. Krizhevsky, J. Ibarz, and D. Quillen, "Learning hand-eye coordination for robotic grasping with deep learning and large-scale data collection" The International Journal of Robotics Research, 2018; L. Pinto and A. Gupta, "Supersizing self-supervision: Learning to grasp from 50k tries and 700 robot hours" in ICRA, 2016) propose to only use RGB inputs to score grasp candidates. To train on real data, collecting over 800k real grasps over the course of two months has been proposed. This leads to training a CNN which scores the grasp success probability given the corresponding motor command. In another document (V. Satish, J. Mahler, and K. Goldberg, "On-policy dataset synthesis for learning robot grasping policies using fully convolutional deep networks" RAL, 2019) the authors use deep learning to train a robot policy which is capable of fast evaluation of millions of grasp candidates. Mousavian et al. (A. Mousavian, C. Eppner, and D. Fox, "6-dof graspnet: Variational grasp generation for object manipulation" in ICCV, 2019.) leverage a variational auto-encoder to map from partial point cloud observations to a set of possible grasps for the object of interest. In contrast to generative approaches, discriminative models are usually computationally expensive as each of the proposals needs to be evaluated before grasping can be attempted.

Concerning generative models, Jiang et al. (Y. Jiang, S. Moseson, and A. Saxena, "Efficient grasping from rgbd images: Learning using a new rectangle representation" in ICRA, 2011.) teaches to infer oriented rectangles in the image plane, representing plausible gripper positioning. Redmon et al. (J. Redmon and A. Angelova, "Real-time grasp detection using convolutional neural networks" in ICRA, 2015.) simultaneously predict object class and, similar to Jiang et al., oriented rectangles depicting the grasping instructions. They further extend their method to return a set of multiple possible grasps as most objects can be usually grasped at several locations. Lenz et al. (I. Lenz, H. Lee, and A. Saxena, "Deep learning for detecting robotic grasps" The International Journal of Robotics Research, 2015.) propose a cascade network, where the first network produces candidate grasps, which are subsequently scored by the second network. In some documents (D. Morrison, P. Corke, and J. Leitner, "Closing the loop for robotic grasping: A real-time, generative grasp synthesis approach" arXiv preprint arXiv:1804.05172, 2018; "Learning robust, real-time, reactive robotic grasping" The International Journal of Robotics Research, 2020.), the authors leverage a small CNN to generate antipodal grasps. They predict the grasping quality, angle and gripper width for each individual pixel. The approach called S4G (Y. Qin, R. Chen, H. Zhu, M. Song, J. Xu, and H. Su, "S4g: Amodal single-view single-shot se (3) grasp detection in cluttered scenes" in Conference on robot learning, 2020) uses a Single-Shot Grasp Proposal Network grounded on Point-Net++ (C. R. Qi, H. Su, K. Mo, and L. J. Guibas, "Pointnet: Deep learning on point sets for 3d classification and segmentation" in CVPR, 2017) to efficiently predict amodal grasp proposals.

Generative methods are thereby usually tailored towards the robot or gripper used during training.

Another approach lies in reinforcement learning to teach grasping to a robot. For example, it has been proposed to utilize human demonstrations to learn robotic grasping (S. Song, A. Zeng, J. Lee, and T. Funkhouser, "Grasping in the wild: Learning 6dof closed-loop grasping from low-cost demonstrations" IEEE Robotics and Automation Letters, 2020.). However, such methods require additional hardware and a manual recording of a vast amount of training grasps. Acquiring a large grasping data collection can be labor intensive and difficult to optimize for a particular environment.

"HOnnotate: A Method for 3D Annotation of Hand and Object Poses" (Hampali SHREYAS et al) concerns a method for creating a dataset of images in which the 3D pose of a hand manipulating an object is known. The hand's joints locations are known and the MANO hand model is used. More precisely, this document discloses using a sequence T of RGB-D images showing a hand holding an object. A masking is performed with a segmentation mask to identify pixels that belong to the object and the hand ("*Silhouette discrepancy term $E_{mask}$*"), using a dedicated neural network DeepLabv3.

"Learning single-image 3D reconstruction by generative modelling of shape, pose and shading" (Paul Henderson et al) proposes a unified frame-work enabling class-specific 3D reconstruction from a single image and generation of new 3D shape samples. Such a frame-work can be trained purely from 2D images without pose annotations and with only a single view per instance. It relies on meshes as an output representation allowing to reason over lighting parameters and to exploit shading information during training.

"Rethinking Atrous Convolution for Semantic Image Segmentation" (Liand Chieh Chen et al) proposed a model "DeepLabv3" employing atrous convolution with unsampled filters to extract dense feature maps and to capture long range context.

"Data Dreaming for Object Detection: Learning Object-Centric State Representations for Visual Imitation" (Sieb Maximilian et al) is directed to enabling a robot to imitate demonstrated skills. This document relates to demonstrating how different objects should interact with one another.

"Grasping Field: Learning Implicit Representations for human Grasps" (Karunratanakul Korrawe et al) proposes a representation for hand-object interaction, namely the grasping field (GF). Learning from data, the GF captures the critical interactions between hand and object by modelling the joint distribution of hand and object shape in a common frame-work.

The known techniques are still not satisfactory.

Summary

The present disclosure overcomes one or more deficiencies of the prior art by proposing a method for controlling a grasping robot comprising:

a learning phase including:

a. obtaining a sequence of RGB-D images showing a human hand holding (i.e. grasping) an object under different orientations,

b. performing, on each RGB-D image of the sequence, a segmentation (for example a 2D segmentation by a convolutional neural network trained for this task) to identify the pixels that belong to the hand and the pixels that belong to the object so as to form a hand segmentation mask and an object segmentation mask for each image,

c. forming, using the depth information of the RGB-D images and the corresponding segmentation masks, a 3D volume of the hand and a 3D volume of the object (a single 3D volume for the hand and a single 3D volume for the object, from the plurality of RGB-D images, for example a TSDF volume),

d. extracting a point cloud of the hand from the 3D volume of the hand and a point cloud of the object from the 3D volume of the object,

e. positioning a virtual hand model in space (its pose is determined) using the sequence, positioned similarly to the hand in this sequence (for example by a convolutional neural network trained to identify how a virtual hand model grasps/holds the object and where it is located in space and how it is shaped, how its fingers hold the object (i.e. where the fingers and the joints are located)),

f. aligning the virtual hand model obtained in step d with the point cloud of the hand obtained in step c so as to obtain a training output comprising the point cloud of the object and the positioned virtual hand model (several training outputs can be obtained, for different objects); and

a grasping phase including:

g. acquiring an RGB-D image of a scene (for example by an RGB-D camera) in which an object of the same type as the object (the type of object being a class such as mug, drill, ball, etc. - by way of example, the object can be identical to the one of the sequence) of the sequence of RGB-D image is present, the grasping robot being able to operate within the scene (i.e. it could grasp the object with the appropriate grasping motion, the object is not outside of the reach of the grasping robot),

h. determining a point cloud of the object (corresponding to the object in the scene) and its pose from the image acquired in step g (for example using a convolutional neural network trained to identify this object and by forming a point cloud from the RGB-D image (the pose is known from the depth information));

i. matching the point cloud of the object determined from the image acquired in step g with the point cloud of the object of the training output to deduce the position of a virtual hand model grasping the object in the scene similarly to the virtual hand model of the training output,

j. determining a grasping control to be used to grasp, by the grasping robot, the object, by determining a control corresponding to the virtual hand model having a position deduced in step i (this grasping control can then be applied to the grasping robot and the method can include the actual grasping of the object).

Thus, the above method comprises a learning phase in which a grasping sample will be obtained, which will be used to determine how to grasp the object by the robot.

In this approach, it is not required to perform a full reconstruction of the object as was performed in the methods of the prior art in the training phase. Thus, the present method is more efficient and requires less input data.

The training output is a pair of a virtual hand model (having a position known) and the point cloud of the object (the two elements of the pair have been aligned with each other).

The virtual hand model can also be a point cloud but comprises information such as the respective location of each finger or of at least the thumb and the index (points clouds can be matched with one another). By way of example, the virtual hand model can be the MANO hand model (J. Romero, D. Tzionas, and M. J. Black, "Embodied hands: Modeling and capturing hands and bodies together" ACM ToG, 2017). The virtual hand model may also be a skeleton representation of a hand which indicates where the finger joints are located. Determining a positioned hand model comprises determining where these finger joints (for example) are located when the hand grasps the object as shown in the sequence.

Determining a grasping control can be performed because a correspondence table can be prepared to match grasping robot controls with the virtual hand model, as it indicates how to grasp an object (i.e. where fingers should be for grasping an object). From the matching step, it is possible to deduce how the hand should be located for the real object present in the scene (having a known pose), and from this it is possible to deduce how the robot can grasp the object.

According to a particular embodiment, step c further comprises a step in which the shape of the 3D volume of the object is completed using a 3D-convolutional neural network.

The person skilled in the art will be able to train this 3D-convolutional neural network to perform the task of completing the shape of the object. By completing the shape, what is meant is that portions which are not visible in the sequence are predicted by the 3D-convolutional neural network.

Using a 3D-convolutional neural network is advantageous as it can receive a 3D volume as input.

According to a particular embodiment, the 3D-convolutional neural network is trained using a dataset of synthetic 3D volumes of the object.

According to a particular embodiment, step c comprises successively processing each RGB-D image including:

- forming a single 3D volume of the hand and of the object,
- aligning this single 3D volume with the 3D volume of the hand and the 3D volume of the object obtained by processing the previous RGB-D image if it exists, to obtained a single aligned 3D volume,
- applying the hand segmentation mask to the single aligned 3D volume to obtain a 3D volume of the hand,
- applying the object segmentation mask to the single aligned 3D volume to obtain a 3D volume of the object.

The aligning step can be performed, for example, using the iterative Closest Point (ICP) algorithm.

According to a particular embodiment, step b is performed using a convolutional neural network trained with a dataset of synthetic RGB-D or RGB images of hands holding objects.

According to a particular embodiment, step i comprises using a encoder to obtain a descriptor of the scene and a descriptor of the grasping sample, and determining if there is a match between the two descriptors.

This will facilitate the matching step. By way of example the encoder can be PPFoldNet (H. Deng, T. Birdal, and S. Ilic, "Ppf-foldnet: Unsupervised learning of rotation invariant 3d local descriptors" in ECCV, 2018).

The use of this encoder allows working with partial reconstructions of the object from the scene.

If there are multiple training outputs, the best match is selected.

According to a particular embodiment, the steps of the learning phase are performed for a plurality of sequences of RGB-D images each showing a hand holding an object, the objects of at least two sequences being different.

The invention also proposes a device for controlling a grasping robot comprising a memory including the grasping sample obtained in the training phase of the method as defined above, and a processor configured to perform the steps of the grasping phase of the method as defined above.

The invention also proposes a system comprising the device as defined above, an RGB-D camera, and a grasping robot.

In one particular embodiment, the steps of the method are determined by computer program instructions.

Consequently, the invention is also directed to a computer program for executing the steps of a method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Brief description of the drawings

Further features and advantages of the present disclosure will become apparent from the following description of certain embodiments thereof, given by way of illustration only, not limitation, with reference to the accompanying drawings in which:

Figure 1 is a schematic illustration of a system according to an example.
Figure 2 is a schematic representation of the steps of a method according to an example.

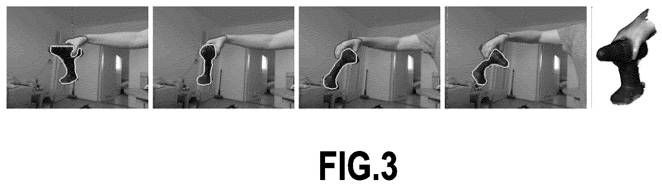

Figure 3 shows the images of a sequence and the final 3D volume.

Description of embodiments

We will now describe a method for controlling a grasping robot, which leverages information from sequences of RGB-D images in which a human hand grasps an object and shows how should a hand interact with an object, to determine controls to be applied to the grasping robot.

In particular, it should be noted that the sequences of RGB-D images can be short (for example within 100-400 frames), which is particularly advantageous.

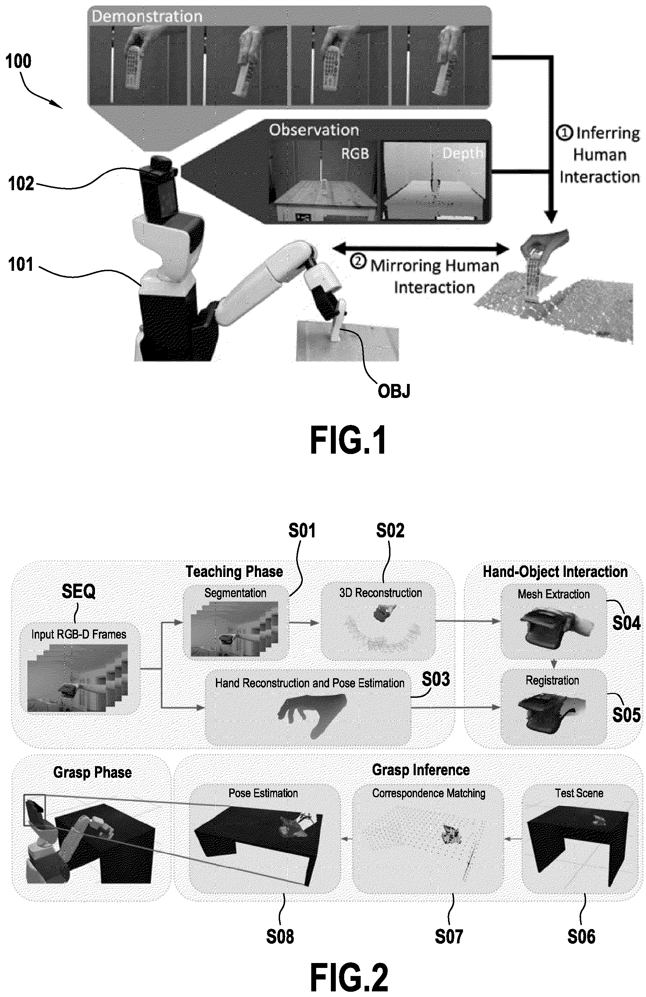

On figure 1, a system 100 including a grasping robot 101 is shown. The grasping robot 101 is equipped with an RGB-D camera 102 which observes a scene in which an object OBJ is present. The grasping arm of the grasping robot can operate (i.e. grasp objects) within this scene.

The present method comprises a learning phase, designated as demonstration in figure 1, in which sequences of RGB-D images are processed to obtain grasping samples, as will be explained hereinafter, so that in a grasping phase (observation on the figure), it is possible to control the robot by deducing the commands to the used from the grasping samples.

In the present description, a grasping command is successful when the grasping robot grasps and lifts the object to be grasped for several seconds, for example.

The decomposition of the method into the learning and the grasping phase has been observed to allow the method to scale to several different grasping robots, given an adequate mapping from human hand (or the virtual hand model) to grasping robot. This leads to teaching the grasping robot through a human demonstration, which allows reaching a higher level of automation, especially in less structured environments (i.e. in contrast to environments such as factories, where the object instance is precisely know priorly as well as location of conveyors, lighting etc; which are all well understood and controlled). For example, this can be performed in different home environments where there are other objects and where lighting is influenced by daytime.

We will now describe in greater detail the learning phase and the grasping phase.

On figure 2, the steps of the method are schematically represented.

As input, the learning phase uses a sequence SEQ of RGB-D frames showing a (human) holding an object (the same object for a given sequence) under different orientations. While a single image could be used, better results are obtained according to the invention with sequences of a plurality of images showing different orientation of the object in different images. The hand and the object will be later on reconstructed as a rigid body (movement between the two should be minimal).

By way of example, it is possible to use a synthetic sequence from the dataset known to the person skilled in the art as ObMan (Y. Hasson, G. Varol, D. Tzionas, I. Kalevatykh, M. J. Black, I. Laptev, and C. Schmid, "Learning joint reconstruction of hands and manipulated objects" in CVPR, 2019) and real sequences acquired by an RGB-D camera. On each RGB-D image of the sequence SEQ, a segmentation (step S01) is performed to identify the pixels that belong to the hand and the pixels that belong to the object so as to form a hand segmentation mask and an object segmentation mask for each image. This step S01 can be implemented by means of a convolutional neural network such as the R-CNN (K. He, G. Gkioxari, P. Dollar, and R. Girshick, "Mask r-cnn" in ' ICCV, 2017). Training this convolutional neural network can be performed using the labels from the above mentioned dataset, and a binary cross entropy loss can be used to adapt the weights of the convolutional neural network for each class (i.e. mug, pen, etc.) and instance of object (i.e. a type of mug, etc.) so as to enhance the segmentation quality by preventing inter-class competition.

In a subsequent step S02, a 3D volume of the hand and a 3D volume of the object for sequence SEQ are formed, using the depth information of the RGB-D images and the corresponding segmentation masks (hand mask/object mask). Performing this step can comprise successively processing each RGB-D image including:

- forming a single 3D volume of the hand and of the object (for example a Truncated Signed Distance Field (TSDF) volume, using KinectFusion (S. Izadi, D. Kim, O. Hilliges, D. Molyneaux, R. Newcombe, P. Kohli, J. Shotton, S. Hodges, D. Freeman, A. Davison, et al., "Kinectfusion: real-time 3d reconstruction and interaction using a moving depth camera" in symposium on User interface software and technology, 2011)),
- aligning this single 3D volume with the 3D volume of the hand and the 3D volume of the object obtained by processing the previous RGB-D image if it exists, to obtained a single aligned 3D volume (for example using the Iterative Closest Point (ICP) algorithm, as disclosed by P.J. Besl et al. and S. Rusinkiewicz et al (P. J. Besl and N. D. McKay, "Method for registration of 3-d shapes" in Sensor fusion IV: control paradigms and data structures. International Society for Optics and Photonics, 1992; S. Rusinkiewicz and M. Levoy, "Efficient variants of the icp algorithm" in Proceedings third international conference on 3-D digital imaging and modeling, 2001)),
- applying the hand segmentation mask to the single aligned 3D volume to obtain a 3D volume of the hand,
- applying the object segmentation mask to the single aligned 3D volume to obtain a 3D volume of the object.

The above steps perform a continuous tracking of the hand and the object together (initially as a single 3D volume), which stabilizes the process and makes the camera pose estimation more robust. This results from the fact that household object can have a rather simple geometry (too symmetrical), and using the hand will introduce a more complex structure to be tracked.

It should be noted that the above steps can be performed using the pipeline known to the person skilled in the art as Kinectfusion, where the TSDF volumes of both hand and object are continuously fused, and the point cloud are aligned through ICP with the extracted point cloud from the fused TSDF volume.

It has been observed that the above steps also filter out the rest of the human body (arm, etc.) to better focus on the hand and the object.

Forming the 3D volume of the object can include an optional step of completing the shape of the 3D volume of the object using a 3D-convolutional neural network.

After obtaining an initial 3D volume, the object 3D volume may not be complete due to self-occlusion and partial visibility. As a detailed and complete mesh may have a positive influence on the subsequent tasks, a shape completion step is performed. This step could be performed using different approaches. For example, it is possible to use a 3D convolutional neural network to directly correct the 3D volume of the object, for example expressed as a TSDF volume. It has been observed that despite the cubic complexity scaling of TSDF, they still provide a suitable solution where both the object and the hand have a limited spatial extent. By way of example, the 3D convolutional neural network can be a 3D version of the convolutional neural network known as UNet (O. Ronneberger, P. Fischer, and T. Brox, "U-net: Convolutional networks for biomedical image segmentation" in MICCAI, 2015), with skip-connections for improved accuracy.

The 3D convolutional neural network can be fed with the TSDF volume of the object obtained from the depth information of the images and the segmentation masks. By way of example, the TSDF volumes can have a 64x64x64 resolution. The 3D volume can be encoded into a 512-dimensional feature descriptor which is additionally concatenated with RGB features to provide complementary image information in addition to the geometry. The decoder consists of 6 upconvolutions with a kernel size of $3 \times 3 \times 3$ followed by a max-pooling layer to eventually reach the input resolution (the encoder and the decoder form the 3D convolutional neural network).

The object mesh prediction is modeled as a classification task where each voxel in the output volume represents its prediction score, denoting if a voxel is occupied. Since only a small portion of voxels in the volume is occupied, the training data is highly imbalanced. Thus, a class average loss is applied and the focal loss (T.-Y. Lin, P. Goyal, R. Girshick, K. He, and P. Dollar, "Focal loss for dense object detection" in ICCV, 2017) as objective function to re-balance the loss contributions is additionally used according to the following function:

$$L(p) = \frac{1}{Pos} \sum_{p \in Pos} -(1-p)^{\gamma} log(p) + \frac{1}{Neg} \sum_{p \in Neg} -(1-p)^{\gamma} log(p)$$

**Wherein** *Pos* and *Neg* respectively represent the occupied and empty voxels and y = 2 (as proposed in document "Focal loss for dense object detection").

The 3D convolutional neural network can be trained for the task of shape completion by first rendering multiple images from different views of various hand-object interactions. The associated object TSDF are then extracted by implementing steps S01 and S02 and inputted to the 3D convolutional neural network so as to train this network, while the object meshes obtained when the synthetic data was generated is used as ground truth.

Step S03 can then be carried out in which a virtual hand model is positioned in space using the sequence of RGB-D images, and positioned similarly to the hand in the RGB-D sequence.

A convolutional neural network can be used to implement this step.

By way of example, the given virtual hand model can be the MANO hand model (J. Romero, D. Tzionas, and M. J. Black, "Embodied hands: Modeling and capturing hands and bodies together" ACM ToG, 2017) which maps parameters for hand pose and shape to a mesh. The MANO hand model is developed from multiple scanned real hands featuring realistic deformations. As prediction under occlusion is difficult, the method of Y. HASSON et al. (Y. Hasson, G. Varol, D. Tzionas, I. Kalevatykh, M. J. Black, I. Laptev, and C. Schmid, "Learning joint reconstruction of hands and manipulated objects" in CVPR, 2019) is used to jointly train the CNN used for hand pose and object mesh estimation, using auxiliary contact and collision losses to encourage natural predictions without collision, which mutually improves both tasks. It can be observed that the method of Hasson uses a 2D CNN for extracting features from RGB images and proves that jointly estimating the hand and object mesh together improves the network performance. Then, it is possible to leverage the hand branch of the architecture of document "Learning joint reconstruction of hands and manipulated objects" for a complete mesh reconstruction. As the hand is part of a joint reconstruction, the pose is already close to the actual grasping location.

Nevertheless, to further improve grasping, the Iterative Closest Point algorithm is further used ICP to tightly align the hand mesh with the point cloud extracted (step S04) from the TSDF volume of the partial hand reconstruction (step S05 on the figure). This allows calculating the transformation of the hand mesh in robot view coordinates ready to calculate grasping instructions. It should be noted that for this step, a point cloud has been extracted from the TSDF volume as the virtual hand model is also a point cloud. In the present description, the expression "3D volume" can designate a TSDF volume.

This amounts to aligning the virtual hand model of step S03 with point cloud form of the hand obtained in step S04 so as to obtain a training output which includes the 3D volume of the object and the positioned virtual hand model.

Acquiring a plurality of different grasping samples can be performed during the learning phase.

Subsequently, the grasping phase can be performed. The first step of this phase is step S06 in which an RGB-D image of a scene in which an object of the same type of the object of the sequence SEQ is present; the grasping robot will be able to operate within the scene, for example to grasp the object.

In step S06, a point cloud of the object and its pose are determined, for example (for example using a convolutional neural network trained to identify this object and by forming a point cloud from the RGB-D image (the pose is known from the depth information)).

A matching step (S07) is then performed in which the point cloud of the object determined from the image of the scene is matched with the point cloud of the object of the training output to deduce the position of a virtual hand model grasping the object in the scene similarly to the virtual hand model of the training output.

This step may be performed by means of an encoder such as PPFFoldNet (H. Deng, T. Birdal, and S. Ilic, "Ppf-foldnet: Unsupervised learning of rotation invariant 3d local descriptors" in ECCV, 2018) which encodes the information of the local geometry in a high dimensional feature descriptor. Thereby, we calculate feature descriptors for both grasping sample and the acquired RGB-D image. We then align both point clouds through robust feature matching using RANSAC. It should be noted that if there are multiple training outputs, the best matching is selected.

The virtual hand model, known from the training output, may indicate the location of the index and of the thumb, and from the position of these fingers, it is possible to determine the grasping instructions to be applied by a grasping robot, using the pose of the object in the scene. By way of example, it is possible to prepare a correspondence table between the positions of the thumb and of the index and the grasping instructions to be used. Consequently, it is easy to adapt the method to a new grasping robot. By way of example, the method can be implemented using the grasping robot manufactured by Toyota under the name Human Support Robot with objects arranged one meter away from the robot. This robot is described in document "Development of Human Support Robot as the research platform of a domestic mobile manipulator" (Takashi Yamamoto, Koji Terada, Akiyoshi Ochiai, Fuminori Saito DOI:10.1186/s40648-019-0132-3).

The present method can be implemented by a processor of the grasping robot or by a processor of a device controlling the robot such as a computer.

To test the method, different objects have been tested. Figure 4 shows a drill in four frames of a sequence, and the corresponding grasping sample obtained from the corresponding sequence.

Also, for example, the sequences can have a length of less than one minute (approximatively 100-400 frames) and may observe the human hand-object interaction at a distance of about 0.5 meter.

The present method uses a demonstration, by a human, of how to grasp an object, and leverages information from a sequence of RGB-D images of this interaction to obtain a grasping sample. This sample is subsequently used to teach the grasping robot how to grasp an object.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

**Claims**

1. A method for controlling a grasping robot comprising:

   a learning phase including:

   a. obtaining a sequence (SEQ) of RGB-D images showing a human hand holding an object under different orientations,
   b. performing (S01), on each RGB-D image of the sequence, a segmentation to identify the pixels that belong to the hand and the pixels that belong to the object so as to form a hand segmentation mask and an object segmentation mask for each image,
   c. forming (S02), using the depth information of the RGB-D images and the corresponding segmentation masks, a 3D volume of the hand and a 3D volume of the object,
   d. extracting (S04) a point cloud of the hand from the 3D volume of the hand and a point cloud of the object from the 3D volume of the object,
   e. positioning (S03) a virtual hand model in space using the sequence, positioned similarly to the hand in this sequence,
   f. aligning the virtual hand model obtained in step d with the point cloud of the hand obtained in step c so as to obtain a training output comprising the point cloud of the object and the positioned virtual hand model; and

**characterized in that** the method comprises a grasping phase including:

g. acquiring an RGB-D image of a scene in which an object of the same class as the object of the sequence of RGB-D images is present, the grasping robot being able to operate within the scene,

h. determining a point cloud of the object and its pose from the image acquired in step g

i. matching the point cloud of the object determined from the image acquired in step g with the point cloud of the object of the training output to deduce the position of a virtual hand model grasping the object in the scene similarly to the virtual hand model of the training output,

j. determining a grasping control to be used to grasp, by the grasping robot, the object, by determining a control corresponding to the virtual hand model having a position deduced in step i.

2. The method of claim 1, wherein step c further comprises a step in which the shape of the 3D volume of the object is completed using a 3D-convolutional neural network.

3. The method of claim 2, wherein the 3D-convolutional neural network is trained using a dataset of synthetic 3D volumes of the object.

4. The method of any one of claims 1 to 3, wherein step c comprises successively processing each RGB-D image including:

- forming a single 3D volume of the hand and of the object,
- aligning this single 3D volume with the 3D volume of the hand and the 3D volume of the object obtained by processing the previous RGB-D image if it exists, to obtain a single aligned 3D volume,
- applying the hand segmentation mask to the single aligned 3D volume to obtain a 3D volume of the hand,
- applying the object segmentation mask to the single aligned 3D volume to obtain a 3D volume of the object.

5. The method of any one of claims 1 to 6, wherein step b is performed using a convolutional neural network trained with a dataset of synthetic RGB-D images of hands holding objects.

6. The method of any one of claims 1 to 5, wherein step i comprises using an encoder to obtain a descriptor of the scene and a descriptor of the grasping sample and determining if there is a match between the two descriptors.

7. The method of any one of claims 1 to 6, wherein the sequence of RGB-D images shows the hand and the object in different orientations in different images.

8. A device for controlling a grasping robot comprising a memory including the grasping sample obtained in the training phase of the method in accordance with any one of claims 1 to 7, wherein the grasping sample is the output of the learning phase which determines how to grasp the object, and a processor configured to perform the steps of the grasping phase of the method in accordance with any one of claims 1 to 7.

9. A system comprising the device of claim 8, an RGB-D camera, and a grasping robot.

10. A computer program including instructions for executing the steps of a method according to any one of claims 1 to 7 when said program is executed by a computer.

11. A recording medium readable by a computer and having recorded thereon a computer program including instructions for executing the steps of a method according to any one of claims 1 to 7.

**Patentansprüche**

1. Verfahren zum Steuern eines Greifroboters, umfassend: eine Lernphase, die Folgendes beinhaltet:

a. Erlangen einer Abfolge (SEQ) von RGB-D-Bildern, die eine menschliche Hand zeigen, die ein Objekt in verschiedenen Ausrichtungen hält,

b. Durchführen (S01), an jedem RGB-D-Bild der Abfolge, einer Segmentierung, um die Pixel, die zu der Hand gehören, und die Pixel, die zu dem Objekt gehören, zu identifizieren, um eine Hand-Segmentierungsmaske und eine Objekt-Segmentierungsmaske für jedes Bild zu bilden,

c. Bilden (S02), unter Verwendung der Tiefeninformationen der RGB-D-Bilder und der entsprechenden Segmentierungsmasken, eines 3D-Volumens der Hand und eines 3D-Volumens des Objekts

d. Extrahieren (S04) einer Punktwolke der Hand aus dem 3D-Volumen der Hand und einer Punktwolke des Objekts aus dem 3D-Volumen des Objekts,

e. Positionieren (S03) eines virtuellen Handmodells im Raum unter Verwendung der Abfolge, das ähnlich wie die Hand in dieser Abfolge positioniert ist,

f. Ausrichten des in Schritt d erlangten virtuellen Handmodells mit der in Schritt c erhaltenen Punktwolke der Hand, um einen Trainingsausgabe zu erlangen, umfassend die Punktwolke des Objekts und das positionierte virtuelle Handmodell; und

**dadurch gekennzeichnet, dass** das Verfahren eine Greifphase umfasst, die Folgendes beinhaltet:

g. Aufnehmen eines RGB-D-Bilds einer Szene, in der ein Objekt derselben Klasse wie das Objekt der Abfolge von RGB-D-Bildern vorhanden ist, wobei der Greifroboter in der Lage ist, innerhalb der Szene zu betrieben zu werden,

h. Bestimmen einer Punktwolke des Objekts und seiner Lage aus dem in Schritt g aufgenommenen Bild

i. Abgleichen der Punktwolke des Objekts, die aus dem in Schritt g aufgenommenen Bild bestimmt wird, mit der Punktwolke des Objekts des Trainingsausgangs, um die Position eines virtuellen Handmodells abzuleiten, das das Objekt in der Szene ähnlich wie das virtuelle Handmodell des Trainingsausgangs greift,

j. Bestimmen einer Greifsteuerung, die zum Greifen des Objekts durch den Greifroboter verwendet werden soll, durch Bestimmen einer Steuerung, die dem virtuellen Handmodell mit einer in Schritt i abgeleiteten Position entspricht.

2. Verfahren nach Anspruch 1, wobei Schritt c ferner einen Schritt umfasst, in dem die Form des 3D-Volumens des Objekts unter Verwendung eines neuronalen 3D-Faltungsnetzes vervollständigt wird.

3. Verfahren nach Anspruch 2, wobei das neuronale 3D-Faltungsnetz unter Verwendung eines Datensatzes synthetischer 3D-Volumina des Objekts trainiert wird.

4. Verfahren nach einem der Ansprüche 1 bis 3, wobei Schritt c ein aufeinanderfolgendes Verarbeiten von jedem RGB-D-Bilds umfasst, einschließlich:

- Bilden eines einzigen 3D-Volumens der Hand und des Objekts,
- Ausrichten dieses einzelnen 3D-Volumens mit dem 3D-Volumen der Hand und dem 3D-Volumen des Objekts, das durch die Verarbeitung des vorherigen RGB-D-Bilds, falls vorhanden, erlangt wurde, um ein einzelnes ausgerichtetes 3D-Volumen zu erlangen,
- Anwenden der Hand-Segmentierungsmaske auf das einzelne ausgerichtete 3D-Volumen, um ein 3D-Volumen der Hand zu erlangen,
- Anwenden der Objekt-Segmentierungsmaske auf das einzelne ausgerichtete 3D-Volumen, um ein 3D-Volumen des Objekts zu erlangen.

5. Verfahren nach einem der Ansprüche 1 bis 6, wobei Schritt b unter Verwendung eines neuronalen Faltungsnetzes durchgeführt wird, das mit einem Datensatz von synthetischen RGB-D-Bildern von Objekten in den Händen trainiert ist.

6. Verfahren nach einem der Ansprüche 1 bis 5, wobei Schritt i ein Verwenden eines Kodierers umfasst, um einen Deskriptor der Szene und einen Deskriptor des Greifmusters zu erlangen und zu bestimmen, ob es eine Übereinstimmung zwischen den zwei Deskriptoren gibt.

7. Verfahren nach einem der Ansprüche 1 bis 6, wobei die Abfolge von RGB-D-Bildern die Hand und das Objekt in unterschiedlichen Ausrichtungen in verschiedenen Bildern zeigt.

8. Vorrichtung zum Steuern eines Greifroboters, umfassend einen Speicher, der das Greifmuster beinhaltet, das in der Trainingsphase des Verfahrens nach einem der Ansprüche 1 bis 7 erlangt wird, wobei die Greifprobe der Ausgang der Lernphase ist, der bestimmt, wie das Objekt zu greifen ist, und einen Prozessor, der konfiguriert ist, um die Schritte der Greifphase des Verfahrens nach einem der Ansprüche 1 bis 7 durchzuführen.

9. System, umfassend die Vorrichtung nach Anspruch 8, eine RGB-D-Kamera und einen Greifroboter.

10. Computerprogramm, das Anweisungen zum Ausführen der Schritte eines Verfahrens nach einem der Ansprüche 1 bis 7 beinhaltet, wenn das Programm von einem Computer ausgeführt wird.

11. Aufzeichnungsmedium, das von einem Computer lesbar ist und auf dem ein Computerprogramm aufgezeichnet ist, das Anweisungen zum Ausführen der Schritte eines Verfahrens nach einem der Ansprüche 1 bis 7 beinhaltet.

**Revendications**

1. Procédé de commande d'un robot de préhension comprenant :

   une phase d'apprentissage comprenant :

   a. obtention d'une séquence (SEQ) d'images RVB-D montrant une main humaine tenant un objet sous différentes orientations,
   b. réalisation (S01), sur chaque image RVB-D de la séquence, d'une segmentation pour identifier les éléments d'image qui appartiennent à la main et les éléments d'image qui appartiennent à l'objet de façon à former un masque de segmentation de main et un masque de segmentation d'objet pour chaque image,
   c. formation (S02), en utilisant l'information de profondeur des images RVB-D et les masques de segmentation correspondants, d'un volume 3D de la main et d'un volume 3D de l'objet,
   d. extraction (S04) d'un nuage de points de la main à partir du volume 3D de la main et d'un nuage de points de l'objet à partir du volume 3D de l'objet,
   e. positionnement (S03) d'un modèle de main virtuelle dans l'espace en utilisant la séquence, positionné d'une manière similaire à la main dans cette séquence,
   f. alignement du modèle de main virtuelle obtenu à l'étape d avec le nuage de points de la main obtenue à l'étape c de façon à obtenir un résultat d'entraînement comprenant le nuage de points de l'objet et le modèle de main virtuelle positionné ; et

   **caractérisé en ce que** le procédé comprend une phase de préhension comprenant :

   g. acquisition d'une image RVB-D d'une scène dans laquelle un objet de la même classe que l'objet de la séquence d'images RVB-D est présent, le robot de préhension étant capable de fonctionner dans la scène,
   h. détermination d'un nuage de points de l'objet et de sa pose à partir de l'image acquise à l'étape g,
   i. mise en correspondance du nuage de points de l'objet déterminé à partir de l'image acquise à l'étape g avec le nuage de points de l'objet du résultat d'entraînement pour déduire la position d'un modèle de main virtuelle saisissant l'objet dans la scène d'une manière similaire au modèle de main virtuelle du résultat d'entraînement,
   j. détermination d'une commande de préhension devant être utilisée pour saisir, grâce au robot de préhension, l'objet, en déterminant une commande correspondant au modèle de main virtuelle ayant une position déduite à l'étape i.

2. Procédé selon la revendication 1, selon lequel l'étape c comprend en outre une étape dans laquelle la forme du volume 3D de l'objet est complétée en utilisant un réseau neuronal convolutionnel 3D.

3. Procédé selon la revendication 2, selon lequel le réseau neuronal convolutionnel 3D est entraîné en utilisant un ensemble de données de volumes 3D synthétiques de l'objet.

4. Procédé selon l'une quelconque des revendications 1 à 3, selon lequel l'étape c comprend le traitement de manière successive de chaque image RVB-D comprenant :

   - formation d'un volume 3D unique de la main et de l'objet,
   - alignement de ce volume 3D unique avec le volume 3D de la main et le volume 3D de l'objet obtenus en traitant l'image RVB-D précédente si elle existe, pour obtenir un unique volume 3D aligné,
   - application du masque de segmentation de main sur le volume 3D unique aligné pour obtenir un volume 3D de la main,
   - application du masque de segmentation d'objet sur le volume 3D unique aligné pour obtenir un volume 3D de l'objet.

5. Procédé selon l'une quelconque des revendications 1 à 4, selon lequel l'étape b est réalisée en utilisant un réseau neuronal convolutionnel entraîné avec un ensemble de données d'images RVB-D synthétiques de mains tenant des objets.

6. Procédé selon l'une quelconque des revendications 1 à 5, selon lequel étape i comprend l'utilisation d'un encodeur pour obtenir un descripteur de la scène et un descripteur de l'échantillon de préhension et le fait de déterminer s'il y a une correspondance entre les deux descripteurs.

7. Procédé selon l'une quelconque des revendications 1 à 6, selon lequel la séquence d'images RVB-D montre la main et l'objet dans différentes orientations dans différentes images.

8. Dispositif de commande d'un robot de préhension comprenant une mémoire comprenant l'échantillon de préhension obtenu pendant la phase d'entraînement du procédé selon l'une quelconque des revendications 1 à 7, dans lequel l'échantillon de préhension est le résultat de la phase d'apprentissage qui détermine comment saisir l'objet, et un processeur configuré pour réaliser les étapes de la phase de préhension du procédé selon l'une quelconque des revendications 1 à 7.

9. Système comprenant le dispositif selon la revendication 8, une caméra RVB-D, et un robot de préhension.

10. Programme informatique comprenant des instructions pour exécuter les étapes d'un procédé selon l'une quelconque des revendications 1 à 7 quand ledit programme est exécuté par un ordinateur.

11. Support d'enregistrement lisible par un ordinateur et ayant enregistré dessus un programme informatique comprenant des instructions pour exécuter les étapes d'un procédé selon l'une quelconque des revendications 1 à 7.

# FIG.1

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. KEHL** ; **F. MANHARDT** ; **F. TOMBARI** ; **S. ILIC** ; **N. NAVAB**. Ssd-6d: Making rgb-based 3d detection and 6d pose estimation great again. *ICCV*, 2017
- **X. DENG** ; **Y. XIANG** ; **A. MOUSAVIAN** ; **C. EPPNER** ; **T. BRETL** ; **D. FOX**. Self-supervised 6d object pose estimation for robot manipulation. *ICRA*, 2020
- **C. R. QI** ; **H. SU** ; **K. MO** ; **L. J. GUIBAS**. Pointnet: Deep learning on point sets for 3d classification and segmentation. *CVPR*, 2017
- **H. DENG** ; **T. BIRDAL** ; **S. ILIC**. Ppf-foldnet: Unsupervised learning of rotation invariant 3d local descriptors. *ECCV*, 2018
- **KEHL et al.** *Ssd-6d: Making rgb-based 3d detection and 6d pose estimation great again*
- **J. MAHLER** ; **F. T. POKORNY** ; **B. HOU** ; **M. RODERICK** ; **M. LASKEY** ; **M. AUBRY** ; **K. KOHLHOFF** ; **T. KRÖGER** ; **J. KUFFNER** ; **K. GOLDBERG**. Dex-net 1.0: A cloud-based network of 3d objects for robust grasp planning using a multi-armed bandit model with correlated rewards. *ICRA*, 2016
- **J. MAHLER** ; **J. LIANG** ; **S. NIYAZ** ; **M. LASKEY** ; **R. DOAN** ; **X. LIU** ; **J. A. OJEA** ; **K. GOLDBERG**. Dex-net 2.0: Deep learning to plan robust grasps with synthetic point clouds and analytic grasp metrics. *arXiv:1703.09312*, 2017
- **S. LEVINE** ; **P. PASTOR** ; **A. KRIZHEVSKY** ; **J. IBARZ** ; **D. QUILLEN**. Learning hand-eye coordination for robotic grasping with deep learning and large-scale data collection. *The International Journal of Robotics Research*, 2018
- **L. PINTO** ; **A. GUPTA**. Supersizing self-supervision: Learning to grasp from 50k tries and 700 robot hours. *ICRA*, 2016
- **V. SATISH** ; **J. MAHLER** ; **K. GOLDBERG**. On-policy dataset synthesis for learning robot grasping policies using fully convolutional deep networks. *RAL*, 2019
- **A. MOUSAVIAN** ; **C. EPPNER** ; **D. FOX**. 6-dof graspnet: Variational grasp generation for object manipulation. *ICCV*, 2019
- **Y. JIANG** ; **S. MOSESON** ; **A. SAXENA**. Efficient grasping from rgbd images: Learning using a new rectangle representation. *ICRA*, 2011
- **J. REDMON** ; **A. ANGELOVA**. Real-time grasp detection using convolutional neural networks. *ICRA*, 2015
- **I. LENZ** ; **H. LEE** ; **A. SAXENA**. Deep learning for detecting robotic grasps. *The International Journal of Robotics Research*, 2015
- **D. MORRISON** ; **P. CORKE** ; **J. LEITNER**. Closing the loop for robotic grasping: A real-time, generative grasp synthesis approach. *arXiv:1804.05172*, 2018
- Learning robust, real-time, reactive robotic grasping. *The International Journal of Robotics Research*, 2020
- **Y. QIN** ; **R. CHEN** ; **H. ZHU** ; **M. SONG** ; **J. XU** ; **H. SU**. S4g: Amodal single-view single-shot se (3) grasp detection in cluttered scenes. *Conference on robot learning*, 2020
- **S. SONG** ; **A. ZENG** ; **J. LEE** ; **T. FUNKHOUSER**. Grasping in the wild: Learning 6dof closed-loop grasping from low-cost demonstrations. *IEEE Robotics and Automation Letters*, 2020
- **HAMPALI SHREYAS**. *HOnnotate: A Method for 3D Annotation of Hand and Object Poses*
- **PAUL HENDERSON**. *Learning single-image 3D reconstruction by generative modelling of shape, pose and shading*
- **LIAND CHIEH CHEN**. *Rethinking Atrous Convolution for Semantic Image Segmentation*
- **SIEB MAXIMILIAN**. *Data Dreaming for Object Detection: Learning Object-Centric State Representations for Visual Imitation*
- **KARUNRATANAKUL KORRAWE**. *Grasping Field: Learning Implicit Representations for human Grasps*
- **J. ROMERO** ; **D. TZIONAS** ; **M. J. BLACK**. Embodied hands: Modeling and capturing hands and bodies together. *ACM ToG*, 2017
- **Y. HASSON** ; **G. VAROL** ; **D. TZIONAS** ; **I. KALEVATYKH** ; **M. J. BLACK** ; **I. LAPTEV** ; **C. SCHMID**. Learning joint reconstruction of hands and manipulated objects. *CVPR*, 2019
- **K. HE** ; **G. GKIOXARI** ; **P. DOLLAR** ; **R. GIRSHICK**. Mask r-cnn. *ICCV*, 2017
- **S. IZADI** ; **D. KIM** ; **O. HILLIGES** ; **D. MOLYNEAUX** ; **R. NEWCOMBE** ; **P. KOHLI** ; **J. SHOTTON** ; **S. HODGES** ; **D. FREEMAN** ; **A. DAVISON et al.** Kinectfusion: real-time 3d reconstruction and interaction using a moving depth camera. *symposium on User interface software and technology*, 2011
- Method for registration of 3-d shapes. **P. J. BESL** ; **N. D. MCKAY**. Sensor fusion IV: control paradigms and data structures. International Society for Optics and Photonics, 1992

- **S. RUSINKIEWICZ** ; **M. LEVOY**. Efficient variants of the icp algorithm. *Proceedings third international conference on 3-D digital imaging and modeling*, 2001
- **O. RONNEBERGER** ; **P. FISCHER** ; **T. BROX**. U-net: Convolutional networks for biomedical image segmentation. *MICCAI*, 2015
- **T.-Y. LIN** ; **P. GOYAL** ; **R. GIRSHICK** ; **K. HE** ; **P. DOLLAR**. Focal loss for dense object detection. *ICCV*, 2017
- **TAKASHI YAMAMOTO** ; **KOJI TERADA** ; **AKIYOSHI OCHIAI** ; **FUMINORI SAITO**. *Development of Human Support Robot as the research platform of a domestic mobile manipulator*